Europäisches Patentamt

European Patent Office

Office européen des brevets

(11) Publication number: **0 152 299**
**B1**

# EUROPEAN PATENT SPECIFICATION

(45) Date of publication of patent specification: **19.04.89**

(51) Int. Cl.⁴: **G 02 B 23/00, G 02 B 23/26**

(21) Application number: **85300886.0**

(22) Date of filing: **11.02.85**

(54) Apparatus for executing maintenance work on the wall of vacuum vessel.

(30) Priority: **09.02.84 JP 23242/84**
**09.02.84 JP 23243/84**
**10.02.84 JP 23271/84**
**10.02.84 JP 23272/84**

(43) Date of publication of application:
**21.08.85 Bulletin 85/34**

(45) Publication of the grant of the patent:
**19.04.89 Bulletin 89/16**

(84) Designated Contracting States:
**DE FR GB**

(56) References cited:
DE-A-3 242 836
FR-A-2 122 552
GB-A-1 179 413

NUCLEAR ENGINEERING INTERNATIONAL,
vol. 19, no. 222, November 1974, pages 934-
937, IPC, Haywards Heath, GB; Dr.R. SAGLIO:
"Routine PWR pressure vessel checkout"

CHEMICAL ABSTRACTS, 71-Nuclear
Technology, vol. 95, 1981, no. 158164c,
Columbus, Ohio, US; M. CHIBA et al.: "Study of
interdiffusion process of titanium evaporated
on molybdenum substrate", & SHINKU 1981,
24(4), 161-4

(73) Proprietor: **MITSUBISHI DENKI KABUSHIKI
KAISHA**
**2-3, Marunouchi 2-chome Chiyoda-ku**
**Tokyo 100 (JP)**

(72) Inventor: **Kojiro, Tetsuya**
**17-11, Yokoo 2-chome Suma-ku**
**Kobe Hyogo Prefecture (JP)**

(74) Representative: **Lawson, David Glynne et al**
**MARKS & CLERK 57-60 Lincoln's Inn Fields**
**London WC2A 3LS (GB)**

(56) References cited:
L. HOLLAND: "Vacuum deposition on thin
films", sixth printing, 1970, pages 104-135,
Chapman and Hall Ltd., London, GB.

REMOTE SYSTEMS TECHNOLOGY (PROC. OF
28th CONF.), vol. 1/2, 1980, pages 13-19, La
Grange Park, Illinois, US; J. VERTUT et al.:
"MA-23 M contained servomanipulator with
telvision cameras on pica and paiade
telescopic supports with computerized
integrated control"

Courier Press, Leamington Spa, England.

## Description

The present invention relates to an apparatus for executing maintenance work or the inner wall of a vacuum vessel such as in a vacuum vessel of a nuclear fusion reactor.

A titanium coating is formed on the inner wall of a vacuum vessel of this type. In the conventional maintenance work of the inner wall of the vacuum vessel, a defective portion of the titanium coating is repaired by applying a high voltage large current to a titanium ball held at a predetermined position in the vacuum vessel to melt and diffuse the ball. The titanium ball is mounted at the end of a shaft-shaped structure. In order to maintain the vacuum vessel in a vacuum, the outside of the shaft-shaped structure is surrounded by a tubular guide, which is connected to a predetermined portion of the vessel, the shaft-shaped structure is hung in the tubular guide by a drive mechanism provided at the top of the tubular guide to be elevationally driven upwards and downwards in the state that the interior of the structure in which the tubular guide is connected to the vessel is maintained in a vacuum. When the titanium coating is formed at this time, the titanium ball mounted at the end of the shaft-shaped structure is moved down to a predetermined position in the vessel. After the titanium coating is finished, the shaft-shaped structure and the titanium ball are again contained in the tubular guide. A high voltage lead assembly for energizing the titanium ball is connected to the ball, but the outside of the lead assembly for electrically insulating the lead assembly from the shaft-shaped structure is covered with an inorganic insulator.

The conventional apparatus is constructed as described above, the titanium ball can be fused and diffused only at one predetermined position in the vacuum vessel, but it cannot locally form a titanium coating selected for only a necessary portion to repair the coating in the vessel. Further, the apparatus does not have means for observing the state in the vacuum vessel. Therefore, it has such disadvantages that the titanium ball is consumed unnecessarily, the working time for forming the coating is long, and it is necessary to replace the titanium ball many times, thereby resulting in poor economy as well as making it difficult to determine the state of the coating after forming the coating.

The present invention was accomplished in order to eliminate the above-mentioned defects. The present invention resides in an apparatus for executing maintenance work on the inner wall of a vacuum vessel, comprising: a tubular structure connected to a port of the vacuum vessel, a rod-shaped arm body elevationally movable in a Z-axis direction in said tubular structure in a system of X—Y—Z orthogonal coordinates having the axial centre of said structure as the Z-axis), a rod-shaped arm end extending from the lower end of said arm body and constructed so that the angle between the longitudinal axis of the arm end and the Z-axis may be altered, an arm rotating unit for rotating said arm end about the Z-axis, a movable block capable of moving along said arm end, for holding a titanium deposition source, a high voltage lead assembly arranged through said structure to said titanium deposition source to supply current to said titanium deposition source, a drive unit for driving said arm body in the Z-axis direction, for alteration of the angle between the arm end and the arm body, for rotation of said arm end around the Z-axis through said arm rotating unit, and for movement of said movable block along the arm end, image forming means mounted at said arm end for imaging the inner wall of said vacuum vessel, and an image guide comprising a bundle of optical fibers provided to transmit the image formed by said image forming means to a predetermined position outside said vacuum vessel.

Brief description of the drawings

Fig. 1 is an explanatory view showing an embodiment of an apparatus for executing maintenance work of the inner wall of a vacuum vessel according to the present invention;

Fig. 2 is an explanatory view showing a principle of an image guide of Fig. 1;

Fig. 3 is an explanatory view showing the detail of the vicinity of the end of an arm of Fig. 1;

Fig. 4 is an explanatory view showing the construction of the interior of a winding mechanism of Fig. 1;

Fig. 5 is a partial sectional elevational view of a trunk support; and

Fig. 6 is a partial sectional elevational view showing the construction of a titanium deposition preventing mechanism and a titanium deposition amount monitoring plate.

In the drawings, the same symbols indicate the same or corresponding parts.

Description of the preferred embodiments

An embodiment of the present invention will be described with reference to the accompanying drawings.

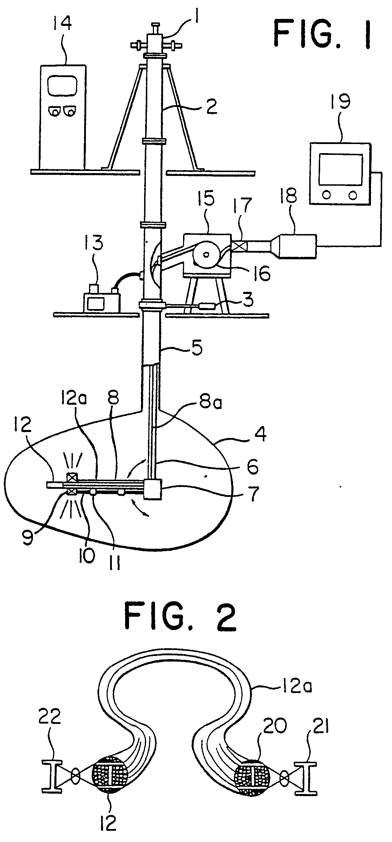

Fig. 1 is an explanatory view showing an embodiment of the present invention. In Fig. 1, numeral 1 designates a drive unit, numeral 2 a tubular structure, numeral 3 a gate valve, numeral 4 a vacuum vessel, and numeral 5 a port which forms part of the vessel 4. The vessel 4 and the port 5 communicate with or shut off the inner atmosphere of the structure 2 by opening or closing the gate valve 3. Numeral 6 denotes an arm body, numeral 7 an arm rotating unit, numeral 8 an arm end, numeral 8a a drive wire, numeral 9 a titanium deposition source, numeral 10 a high voltage lead assembly, numeral 11 high voltage lead supporting rings, numeral 12 an image forming device, numeral 12a an image guide, numeral 13 a vacuum pump unit, numeral 14 an operation board, numeral 15 a winding mechanism box, numeral 16 a winding drum, numeral 17 an optical connector, numeral 18 a television camera, and numeral 19 a monitor television receiver.

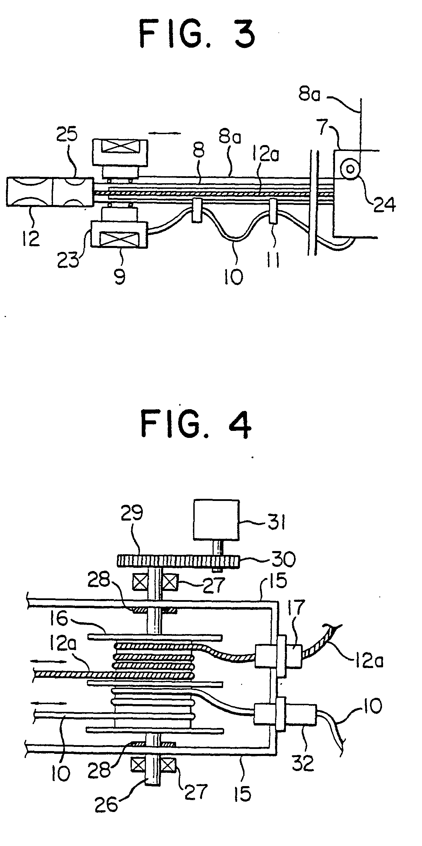

Fig. 2 is an explanatory view showing a principle of the image guide 12a. Numeral 12 indicates an image forming device similar to that in Fig. 1, numeral 20 an image guide receiver, numeral 21 an image, and numeral 22 an object. Fig. 3 is an explanatory view showing the detail of the vicinity of the arm end 8 of Fig. 1, wherein the corresponding parts are denoted by the same symbols as those shown in Fig. 1, numeral 23 indicates a movable block, numeral 24 a pulley, and numeral 25 a light guide.

The image guide 12a comprises, for example, several tens of thousands of ultrafine optical fibers of quartz, one end of which forms the image forming device 12, light incident on the ends of the respective optical fibers of the image forming device 12 is transmitted through the image guide 12a, received through the optical connector 17 by the television camera 18, and displayed on the monitor television receiver 19.

The drive unit 1 elevationally drives upwards and downwards the arm body 6 in the tubular structure 2 and the port 5; converts an angle between the state that the coaxial center of the arm end 8 coincides with the Z-axis (not shown) and the state that the coaxial center of the arm end 8 is disposed in X—Y plane (the state shown in Fig. 1), rotates the arm end 8 through the arm rotating unit 7 around the Z-axis to wind the drive wire 8a through the pulley 24, thereby varying the position in the arm end 8 of the titanium deposition source 9 mounted in the movable block 23. When the position of the block 23 varies, the high voltage lead supporting rings 11 for supporting leads at a plurality of positions, provided along the portion of the high voltage lead assembly 10 along the arm end 8, enable the lead assembly 10 to readily elongate and contract while maintaining the insulation of the lead assembly 10.

The tubular structure 2 is connected to the port 5, the drive unit 1 is controlled from the operation board 14 to set the movable block 23 to a predetermined position, the vacuum pump unit 13 is controlled from the operation board 14 to evacuate the vacuum vessel 4 in a vacuum atmosphere, and a current is supplied to the titanium deposition source 9 to fuse and diffuse the titanium deposition source 9. Further, the entire zone in the vacuum vessel 4 can be monitored by the imaged forming device 12 fastened to the arm end 8. A light guide 25 composed of optical fibers in the same manner as the image guide 12a transmits light from a light source, thereby illuminating the interior of the vessel 4.

When the object 22 is introduced in the vacuum vessel 4, the image thereof is introduced into the image forming device 12 and is transmitted through the image guide 12a to the image guide receiver 20, where it is converted via the television camera 18 into an electric signal and displayed, as an image, on the monitor television receiver 19.

As described above, the local titanium coating can be repaired and the states in the vacuum vessel before and after the repair can be observed.

Fig. 4 is an explanatory view showing the internal construction of the winding mechanism box 15 shown in Fig. 1. In Fig. 4, the corresponding parts are denoted by the same symbols as those shown in Fig. 1. Referring to the Fig., numeral 26 designates a drum shaft of the winding drum 16, numeral 27 bearings of the drum shaft 26, numeral 28 shaft seals, numerals 29, 30 reduction gears, numeral 31 a motor for driving the drum shaft 26, and numeral 32 a wire penetrating unit. The interior of the winding mechanism box 15 is airtightly sealed from the outer atmosphere through a connecting mechanism of the shaft seals 28, the wire penetrating unit 32 and the optical connector 17, and connected to the tubular structure 2 to pass the high voltage lead assembly 10 and the image guide 12a.

When the arm body 6 is moved by the drive unit 1 in the Z-axis direction, the high voltage lead assembly 10 and the image guide 12 provided along the arm end 8 from the arm body 6 are slackened or tensed. Therefore, the drum shaft 26 is rotated in accordance with the rise or fall of the arm body 6 to wind or rewind the lead assembly 10 and the image guide 12 on the winding drum 16. The driving characteristic of the arm driving system is improved by providing such a winding mechanism to prevent the lead assembly 10 and the image guide 12a from deteriorating.

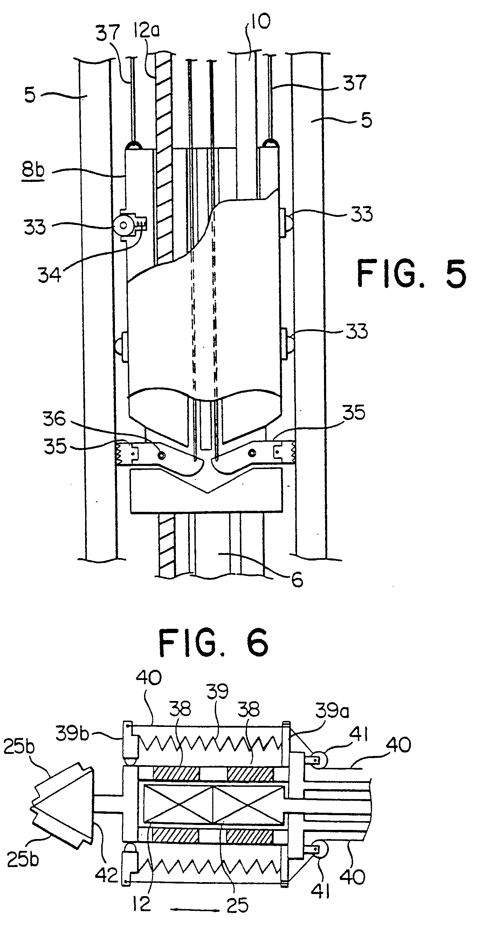

Fig. 5 is a sectional view of an embodiment in which a trunk support is provided in the port 5 of the invention. In Fig. 5, the corresponding parts are denoted by the same symbols as those shown in Fig. 1. Referring to the Fig., numeral 33 denotes guide rollers, numeral 34 springs, numeral 35 fasteners, numeral 36 fulcra of the fasteners 35, and numeral 37 trunk support driving wires. A trunk support 8b has a cylindrical structure, the guide rollers 33 provided on the outer peripheral surface of the support 8b are always contacted with the inner surface of the port 5 by the springs 34, and the support 8b is driven by the drive unit 1 through the trunk support driving wire 37 in the Z-axis direction. The trunk support 8b is perforated axially (i.e., in the Z-axis direction) with penetrating holes, through which the arm body 6, the high voltage lead assembly 10 and the image guide 12a are respectively slidably penetrated. When the lead assembly 10 and the image guide 12a are wound by the winding drum 16, the fasteners 35 are operated by the drive wire 8a to move the lead assembly 10 and the image guide 12a in the X—Y plane at the position of the trunk support 8b to fasten the trunk support 8b at a predetermined position in the port 5. When the lead assembly 10 and the image guide 12a are fastened at a predetermined position in the X—Y plane in the axial length of the trunk support 8b, the lead assembly 10 and the image guide 12a can be readily wound on the drum 16.

Fig. 6 is a partial sectional elevational view showing an embodiment in which a titanium deposition preventing mechanism is provided on the light transmitting surfaces of the image forming device and the light guide radiating end, and a titanium deposition amount monitoring plate is provided at the arm end of the invention. In Fig. 6, numeral 38 indicates a screen, i.e., the surfaces of the image forming device 12 and the light guide radiating end 25 for transmitting light, numeral 39 cylindrical bellows, numeral 39a a stationary flange provided at one end of the bellows 39, numeral 39b a movable flange provided at the other end of the bellows 39, numeral 40 a wire for a titanium deposition preventing mechanism, numeral 41 a pulley, and numeral 42 a titanium monitor supporting member. When the inner wall of the vacuum vessel 4 is observed, a tension is applied to the wire 40 to draw the movable flange 39b toward the stationary flange 30a so as to shorten the bellows 39, thereby disposing the screen 38 at the position so as not to disturb the light to be introduced to the screen 38. The tension of the wire 40 is loosened while a current is supplied to the titanium deposition source 9 to fuse the titanium to thereby perform the depositing work, so that the bellows 39 are elongated, and the flange 39b is returned to the position shown in Fig. 6 to prevent the titanium from depositing on the screen 38.

Since it is difficult to actually measure the amount of the titanium deposited on the inner wall of the vacuum vessel 4, two monitoring plates 25b are, for example, mounted on the supporting member 42, whereby the titanium deposition amount to the inner wall of the vessel 4 is presumed to be equal to the quantity of the titanium deposited on the monitoring plates 25b.

In the above description, the trunk support driving wire 37, the fasteners 35 and the titanium deposition preventing mechanism wire 40 in Fig. 5 are driven by the drive unit 1.

In the embodiments described above, the present invention has been described with respect to the case applied to the nuclear fusion reactor. However, the apparatus of the present invention can be applied also to a light-water type nuclear reactor and a fast breeder.

As set forth above, according to the present invention, since the apparatus is constructed so that the titanium deposition source can be fused and diffused at the arbitrary position in a predetermined range in a vacuum vessel and the function of observing the interior of the vessel is provided, the maintenance work of the inner wall of the vessel can be efficiently performed and the technical reliability can be improved.

**Claims**

1. An apparatus for executing maintenance work on the inner wall of a vacuum vessel (4), comprising:
   a tubular structure (2) connected to a port (5) of the vacuum vessel (4), a rod-shaped arm body (6) elevationally movable in a Z-axis direction in said tubular structure (2) (in a system of X—Y—Z orthogonal coordinates having the axial centre of said structure as the Z-axis),
   a rod-shaped arm end (8) extending from the lower end of said arm body and constructed so that the angle between the longitudinal axis of the arm end (8) and the Z-axis may be altered,
   an arm rotating unit (7) for rotating said arm end about the Z-axis,
   a movable block (23) capable of moving along said arm end, for holding a titanium deposition source,
   a high voltage lead assembly (10) arranged through said structure to said titanium deposition source to supply current to said titanium deposition source,
   a drive unit (1) for driving said arm body (6) in the Z-axis direction, for alteration of the angle between the arm end (8) and the arm body (6), for rotation of said arm end (8) around the Z-axis through said arm rotating unit, and for movement of said movable block (23) along the arm end,
   image forming means (12) mounted at said arm end for imaging the inner wall of said vacuum vessel, and
   an image guide (12a) comprising a bundle of optical fibers provided to transmit the image formed by said image forming means to a predetermined position outside said vacuum vessel.

2. Apparatus as claimed in claim 1, characterised by an optical connector (17) for optically coupling said image guide at the predetermined position of said tubular structure.

3. An apparatus as defined in claim 2, characterised in that a winding mechanism (16) for winding or unwinding said high voltage lead assembly (10) and said image guide (12a) upon movement of said arm body (6) in the Z-axis direction is provided between said tubular structure (2) and said optical connector (17), and a winding mechanism box (15) connected to said structure and having a structure airtightly sealed from the outer atmosphere is provided.

4. An apparaus as defined in claim 1, 2 or 3, characterised in that a trunk support (8b) constructed to move in the Z-axis direction in the port (5) and to stop at an arbitrary position in the Z-axis direction and having penetrating holes, through which said arm body (6), said high voltage lead assembly (10) and said image guide (12a) respectively slidably penetrate, is provided in said structure.

5. An apparatus as defined in claim 1, 2, 3 or 4, characterised in that a titanium deposition shielding mechanism is provided for protecting the surfaces of said image forming means (12) and of a light guide radiating end (25) during the evaporation operation of titanium.

6. An apparatus as claimed in claim 5 in which the depositions shielding mechanism comprises a cylindrical bellows (39) arranged to prevent the titanium from depositing on the surfaces of said image forming means and said light guide radiating end, and means (39, 40) for opening and closing the bellows to cover or expose the surfaces of said image forming means and said light guide radiating end.

7. An apparatus as defined in any preceding claim, characterised in that a titanium deposition amount monitoring plate (25b) for determining the amount of titanium deposited on the inner wall of said vacuum vessel is provided at said arm end.

8. Apparatus as claimed in any preceding claim, characterised in that a gate valve (3) is provided for opening and closing gas communication between the vessel (4) and the tubular structure (2), and a vacuum pump (13) is provided for evacuating the vessel when the vessel is connected to the tubular structure.

9. Apparatus as claimed in any preceding claim, characterised in that a plurality of high voltage lead supporting rings (11) are provided for holding a plurality of portions of said high voltage lead assembly (10) along said arm end and sliding on said arm end when said movable block (23) moves along the said arm end.

**Patentansprüche**

1. Vorrichtung zur Ausführung von Wartungsarbeiten an der Innenwand eines Vakuumbehälters (4), umfassend:
—eine rohrförmige Anordnung (2), die mit einer Öffnung (5) des Vakuumbehälters (4) verbunden ist, wobei ein stangenförmiger Armkörper (6) in der rohrförmigen Anordnung (2) in Z-Achsenrichtung in einem orthogonalen X—Y—Z-Koordinatensystem, dessen axiales Zentrum die Z-Achse ist, in Höhenrichtung beweglich ist,
—ein stangenförmiges Armende (8), das sich von dem unteren Ende des Armkörpers aus erstreckt und so aufgebaut ist, daß der Winkel zwischen der Längsachse des Armendes (8) und der Z-Achse geändert werden kann,
—eine Armdreheinheit (7), um das Armende um die Z-Achse zu drehen,
—einen beweglichen Block (23), der sich längs des Armendes bewegen läßt, um eine Titanbeschichtungsquelle zu halten,
—eine Hochspannungsleitungsanordnung (10), die durch die Anordnung hindurch zu der Titanbeschichtungsquelle gelegt ist, um die Titanbeschichtungsquelle mit Strom zu versorgen,
—eine Antriebseinheit (1), um den Armkörper (6) in der Richtung der Z-Achse anzutreiben, um den Winkel zwischen dem Armende (8) und dem Armkörper (6) zu ändern, um das Armende (8) durch die Armdreheinheit um die Z-Achse herum zu drehen, und um den beweglichen Block (23) längs des Armendes zu bewegen,
—eine Bilderzeugungseinrichtung (12), die an dem Armende montiert ist, um die Innenwand des Vakuumbehälters abzubilden, und
—einen Bildleiter (12a), der ein Bündel von optischen Fasern aufweist, die vorgesehen sind, um das von der Bilderzeugungseinrichtung erzeugte Bild zu einem vorgegebenen Ort außerhalb des Vakuumbehälters zu übertragen.

2. Vorrichtung nach Anspruch 1, gekennzeichnet durch einen optischen Verbinder (17), um den Bildleiter an dem vorgegebenen Ort der rohrförmigen Anordnung optisch anzuschließen.

3. Vorrichtung nach Anspruch 2, dadurch gekennzeichnet, daß zwischen der rohrförmigen Anordnung (2) und dem optischen Verbinder (17) ein Wickelmechanismus (16) vorgesehen ist, um die Hochspannungsleitungsanordnung (10) und den Bildleiter (12a) bei der Bewegung des Armkörpers (6) in der Richtung der Z-Achse aufzuwickeln oder abzuwickeln, und daß ein Wickelmechanismusgehäuse (15) vorgesehen ist, das mit der Anordnung verbunden ist und einen gegenüber der äußeren Atmosphäre luftdicht verschlossenen Aufbau hat.

4. Vorrichtung nach Anspruch 1, 2 oder 3, dadurch gekennzeichnet, daß eine Schaftabstützung (8b) in der Anordnung vorgesehen ist, die so aufgebaut ist, daß sie sich in der Öffnung (5) in der Richtung der Z-Achse bewegt und in einer beliebigen Position in der Richtung der Z-Achse anhält und hindurchgehende Löcher aufweist, durch welche der Armkörper (6), die Hochspannungsleitungsanordnung (10) und der Bildleiter (12a) jeweils gleitend hindurchgehen.

5. Vorrichtung nach Anspruch 1, 2, 3 oder 4, dadurch gekennzeichnet, daß ein Titanbeschichtungs-Abschirmungsmechanismus vorgesehen ist, um die Oberflächen der Bilderzeugungseinrichtung (12) und eines Lichtleiter-Strahlungsendes (25) während des Verdampfungs- oder Beschichtungsvorganges mit Titan zu schützen.

6. Vorrichtung nach Anspruch 5, dadurch gekennzeichnet, daß der Beschichtungs-Abschirmungsmechanismus einen Zylinderbalg (39), der so angeordnet ist, daß er ein Aufbringen von Titan auf die Oberflächen der Bilderzeugungseinrichtung und des Lichtleiter-Strahlungsendes verhindert, sowie eine Einrichtung (39, 40) aufweist, um den Balg zu öffnen und zu schließen, um die Oberflächen der Bilderzeugungseinrichtung und des Lichtleiter-Strahlungsendes abzudecken oder freizulegen.

7. Vorrichtung nach einem der vorherigen Ansprüche, dadurch gekennzeichnet, daß eine Titanbeschichtungsmengen-Überwachungsplatte (25b) an dem Armende vorgesehen ist, um die Menge an Titan zu bestimmen, die auf die Innenwand des Vakuumbehälters aufgebracht wird.

8. Vorrichtung nach einem der vorherigen Ansprüche, dadurch gekennzeichnet, daß ein Absperrventil (3) vorgesehen ist, um die Gasverbindung zwischen dem Behälter (4) und der rohrförmigen Anordnung (2) zu öffnen und zu schließen, und daß eine Vakuumpumpe (13) vorgesehen ist, um den Behälter zu evakuieren, wenn der Behälter an die rohrförmige Anordnung angeschlossen ist.

9. Vorrichtung nach einem der vorherigen Ansprüche, dadurch gekennzeichnet, daß eine Vielzahl von Hochspannungsleitungs-Tragringen (11) vorgesehen sind, um eine Vielzahl von Teilen der Hochspannungsleitungsanordnung (10) längs des Armendes zu halten und an dem Armende entlangzugleiten, wenn sich der bewegliche Block (23) längs des Armendes bewegt.

## Revendications

1. Appareil pour effectuer la maintenance sur la paroi interne d'un réservoir sous vide (4), comprenant:

une structure tubulaire (2) connectée à un orifice (5) du réservoir sous vide (4), un corps (6) de bras en forme de tige mobile en hauteur dans une direction de l'axe Z dans ladite structure tubulaire (2) (dans un système de coordonnées orthogonales X—Y—Z ayant le centre axial de ladite structure en tant qu'axe Z),

une extrémité (8) de bras en forme de tige s'étendant de l'extrémité inférieure dudit corps de bras et construite de manière que l'angle entre l'axe longitudinal de l'extrémité (8) de bras et l'axe Z puisse être modifié,

une unité (7) de rotation du bras pour faire tourner l'extrémité dudit bras autour de l'axe Z, un block mobile (23) capable de se déplacer le long de ladite extrémité du bras, pour maintenir une source de dépôt de titane,

un ensemble conducteur haute tension (10) agencé à travers ladite structure vers ladite source de dépôt de titane pour fournir du courant à ladite source de dépôt de titane,

une unité d'entraînement (1) pour entraîner ledit corps (6) du bras dans la direction de l'axe Z, pour modifier l'angle entre l'extrémité (8) du bras et le corps (6) du bras, pour une rotation de ladite extrémité (8) du bras autour de l'axe Z par ladite unité de rotation du bras et pour un mouvement dudit bloc mobile (23) le long de l'extrémité du bras,

un moyen de formation d'image (12) monté à ladite extrémité du bras pour reproduire la paroi interne dudit réservoir sous vide, et

un guide (12a) de l'image comprenant un faisceau de fibres optiques prévu pour transmettre l'image formée par ledit moyen de formation de l'image à une position prédéterminée en dehors dudit réservoir sous vide.

2. Appareil selon la revendication 1, caractérisé par un connecteur optique (17) pour le couplage optique dudit guide de l'image à la position prédéterminée de ladite structure tubulaire.

3. Appareil selon la revendication 2, caractérisé en ce qu'un mécanisme d'enroulement (16) pour enrouler ou dérouler ledit ensemble conducteur haute tension (10) et ledit guide (12a) de l'image lors d'un mouvement dudit corps (6) du bras dans la direction l'axe Z est prévu entre ladite structure tubulaire (2) et ledit connecteur optique (17) et un coffret de mécanisme d'enroulement (15) connecté à ladite structure et ayant une structure obturée de manière hermétique à l'air par rapport à l'atmosphère externe est prévu.

4. Appareil selon l'une des revendications 1, 2 ou 3, caractérisé en ce qu'un support en coffrage (8b) construit pour se déplacer dans la direction de l'axe Z dans l'orifice (5) et pour s'arrêter en une position arbitraire dans la direction de l'axe Z et ayant des trous de pénétration, par où passe ledit corps (6) du bras, ledit ensemble conducteur haute tension (10) et ledit guide (12a) de l'image respectivement de manière coulissante, est prévu dans ladite structure.

5. Appareil selon la revendication 1, 2, 3 ou 4, caractérisé en ce qu'un mécanisme de protection de dépôt de titane est prévu pour protéger les surfaces dudit moyen de formation d'image (12) et de l'extrémité (25) de rayonnement du guide de lumière pendant l'opération d'évaporation du titane.

6. Appareil selon la revendication 5, où le mécanisme de protection de dépôt comprend un soufflet cylindrique (39) agencé pour empêcher le titane de se déposer sur les surfaces dudit moyen de formation d'image et ladite extrémité rayonnante du guide de lumière, et un moyen (39, 40) pour ouvrir et fermer le soufflet pour couvrir ou exposer les surfaces dudit moyen de formation d'image et de ladite extrémité rayonnante du guide de lumière.

7. Appareil selon toute revendication précédente, caractérisé en ce qu'une plaque (25b) contrôlant la quantité de dépôt de titane pour déterminer la quantité de titane disposé sur la paroi interne dudit réservoir sous vide est prévue à ladite extrémité du bras.

8. Appareil selon toute revendication précédente, caractérisé en ce qu'un robinet (23) est prévu pour ouvrir et fermer la communication de gaz entre le réservoir (4) et la structure tubulaire (2), et une pompe à vide (13) est prévue pour l'évacuation du réservoir lorsque le réservoir est connecté à la structure tubulaire.

9. Appareil selon toute revendication précédente, caractérisé en ce qu'un certain nombre de bagues de support du conducteur haute tension (11) sont prévues pour maintenir un certain nombre de portions dudit ensemble conducteur haute tension (10) le long de ladite extrémité de bras et glissant sur ledit bras et quand ledit bloc mobile (23) se déplace le long de ladite extrémité du bras.

FIG. 1

FIG. 2

1

# FIG. 3

# FIG. 4

# FIG. 5

# FIG. 6